# EUROPEAN PATENT APPLICATION

(11) **EP 1 480 128 A2**
(43) Date of publication of application: **24.11.2004**
(21) Application number: 04252669.9
(22) Date of filing: 07.05.2004
(51) Int. Cl.: G06F 11/273

(54) **Computer service using automated local diagnostic data collection and automated remote analysis**

(30) Priority: 21.05.2003 US 442592
(71) Applicant: Hewlett-Packard Development Company, L.P., Houston, TX 77070 (US)
(72) Inventor: Flocken, Philip A., Denver CO 80202 (US); Arrigo, Ron L., Fort Collins CO 80526 (US); Hawkins, Joshua D., Fort Collins CO 80525 (US); Miner, Jacob, Loveland CO 80537 (US); Tripp, Travis Scott, Fort Collins CO 80526 (US); Shaughnessy, Jay, Cherry Hill NJ 08003 (US); Faihe, Yassine, 5642 CR Eindhoven (NL); Parasuraman, Subalakshmi, Basavangudi (IN); Vaszary, Mark, Roseville CA 95747 (US); Lee, Noreen K., Roseville CA 95661 (US); Brothers, William, Rocklin CA 95765 (US); MacRoberts, Patrick F., Newcastle CA 95658 (US)
(74) Representative: Exell, Jonathan Mark

(57) **Abstract**

Diagnostic data-collection software is triggered by a fault in application software running on a client computer. Data gathered by the diagnostic software is transmitted to a computer system of a service vendor. Analysis software running on the vendor system analyzes the diagnostic data and generates recommendations. The recommendations are posted on a vendor-managed website. The client is informed by email of a URL to access the recommendations. After a validation procedure, the client can access the recommendations. The recommendations can include instructions for a human to execute as well as software to be downloaded to the client computer.

## Description

### BACKGROUND OF THE INVENTION

The present invention relates to computer systems and, more particularly, to a method for a vendor to service a client computer. The invention provides for economical and effective automated and semi-automated servicing of client computers.

Much of modern progress is associated with computers, which are basically "hardware" machines that manipulate data in accordance with "software" programs of instructions. Software programs are generally quite complex: in part because of their intended functionality, and in part due to a requirement to run on a variety of hardware configurations and along with a variety of other software programs. Due to the complexity, software faults are not uncommon. Due to society's increasing dependence on computers, such faults are a significant concern.

To avoid the confusion that arises when a program runs erratically or hangs, many programs and operating systems now provide error messages. In some cases, the messages simply inform the user that an error has occurred, while other software products provide at least some information about the error.

More advanced software makes recommendations for addressing an error. Microsoft Windows XP (available from Microsoft Corporation, Redmond, Washington) provides relatively informative error messages and invites a user to send an error report regarding a software fault to Microsoft. Microsoft collects such error reports, which are then helpful in developing future versions of the software. However, sending the error report does not directly benefit the user, and the range of errors that can be effectively addressed with the recommendations is very limited.

In many cases, the user must contact a vendor's technical support personnel to solve a software problem. Often a customer must wait for access to technical support personnel. It is often difficult for technical support personnel to acquire the information relevant to solving a problem from a user. Finally, it can be difficult for a technical support person to use available information to provide a probable solution. Often one technical support person must seek the help of another, consuming more vendor resources.

To reduce costs, many vendors provide automated help. This can take the form of a fax-back service or a web site or both. Often some menu system helps a user identify a problem from a list and the service then provides a recommended course of action for the user. While such automated systems can reduce costs to the vendor, they are often hard for users, particularly, unsophisticated users to use. Also, the number of possible configurations that can be considered by menu-driven systems is limited. It is difficult for such automated systems to match the technical support person for acquiring and using the detailed data required for providing an optimal recommendation. Many vendors also provide web sites where clients can access support-related information. However, it is often difficult and time consuming to find relevant information on such web sites.

Even the combination of locally generated messages, human technical support, and automated technical support leaves a lot to be desired in terms of effectiveness and convenience. What is needed is an improved method for providing technical support for computer software.

### SUMMARY OF THE INVENTION

The present invention provides a software support service in which a vendor computer system proposes a recommendation based on data gathered on a client computer system. Diagnostic data collection is triggered, either manually (e.g., when the client notices an abnormal behavior of the software) or in response to some event like the detection of a software fault or a configuration change. Diagnostic data-collection software, running on the client computer system, gathers contextual information useful for predicting or diagnosing a fault at the time that the fault occurs. The information is transmitted to the vendor system, which analyzes the diagnostic data and provides recommendations to the client.

Preferably, the vendor posts the recommendation on the Internet, e.g., a web site. Once the solution is posted, the client can be notified, e.g., by email. The client can then access the posting, preferably through a validation process for security. The posting can include steps for a client information-technology person to implement, as well as software patches and updates that can be downloaded to the client computer system.

The most similar prior art is the use of software on the client computer to diagnose problems and recommend courses of action. The present invention suffers relative to this because information must be transmitted back and forth between client and vendor. More than offsetting this is the fact that the vendor analysis software can be continually updated as the vendor gathers more information about problems encountered by the software. The vendor software is much less likely to be limited by what is known at the time the client software was manufactured. In addition, the client computer does not have to devote the resources for an expert diagnosis system that is used only very occasionally. The invention further provides an advantage over prior art by facilitating the escalation of a diagnosed problem to technical support personnel if the client deems that the problem diagnosis is inadequate.

The invention drastically accelerates problem identification and problem resolution. Time and effort are saved for software support clients using the invention since they do not have to search for and gather information from their system and send it to technical support personnel. In addition, they can view solution information almost immediately after a problem occurs.

Time and effort are also saved for technical support personnel, since they are not involved in the initial troubleshooting effort and are not involved at all if the solution information provided to the client solves the problem. If a technical support person is needed to provide additional assistance, the technical support person can start work on the case with immediate access to raw data collected by data-collection software 23 and to the solutions generated by analysis software 31. The technical support personnel can solve more problems the first time, since the characteristics of the collected data are pertinent to the time the fault occurred. By expecting real-time fault data, technical support personnel may not have to reproduce the problem, which may not occur again if the client environment has changed since the time of the original fault. These and other features and advantages of the invention are apparent from the description below with reference to the following drawings.

### BRIEF DESCRIPTION OF THE DRAWINGS

FIGURE 1 is a block diagram of a computer service method in accordance with the present invention.

FIGURE 2 is a flow chart of the method of FIG. 1.

### DETAILED DESCRIPTION

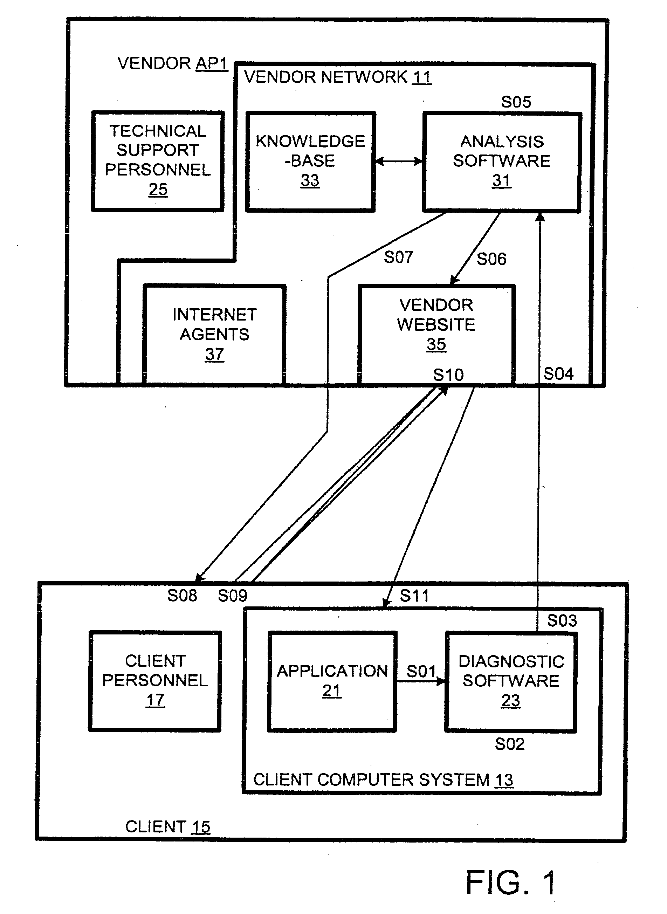

In accordance with the present invention, a computer service vendor AP1 uses a vendor computer network 11 to provide automated service to a client computer system 13 operated by client 15, as shown in FIG. 1. Client 15 is a company that includes human personnel 17 and a computer system 20. Computer system 20 includes several computers including one that runs application program 21 and diagnostic data-collection software 23. Vendor AP1 provides diagnostic data-collection software to client 15.

Vendor AP1 includes human personnel, including technical support personnel 25. Vendor computer network 11 runs a diagnostic-data analysis program 31 and knowledge-base software 33 on the same computer; alternatively, they can be run on separate computers in vendor computer network 11. In addition, vendor computer network 11 manages a website 35, as well as Internet agents 37 (e.g., "bots" and "spiders").

If application 21 suffers a software fault while running on client system 13, computer service method M1 is initiated. At step S01, the fault is detected and, in response, diagnostic data-collection software 23 is launched. At step S02, diagnostic data-collection software 23 gathers information regarding the nature of application 21, nature of the fault, and the overall software and hardware configuration of the computer on which the fault occurred. At step S03, the collected data is transmitted to vendor network 11 over the Internet.

At step S04, vendor network 11 receives the diagnostic data. At step S05, diagnostic analysis software 31 running on vendor network 11 analyzes the collected data, using advanced artificial intelligence algorithms to identify the cause of the fault and information from a knowledge base 33 to recommend a course of action to client 15. Once a recommendation is determined, it is posted on vendor website 35 at step S06. At step S07, vendor network 11 transmits notice to client 15 that the recommendation is posted and provides directions for accessing the recommendations.

Client 15 receives the notice at step S08. In response, client 15 accesses vendor website 35 at step S09. To secure the information on the website from unauthorized access, website 35 implements a validation procedure at step S10. Once validation is complete, client 15 can access and implement the recommendations at step S11.

Method M1 provides for variations of trigger step S01. Preferably, the data-collection software is custom integrated with the application so that the latter can automatically trigger the former when a specific fault occurs. The data-collection software provides a graphic user interface (GUI) to enable a user to trigger data collection manually and directly submit information about a software issue. Alternatively, an accessory application can be running concurrently to detect the software fault and trigger the data-collection software. Also, the data-collection software can be an accessory application running in the background-so it does not need to be separately launched.

The invention also provides for triggering data collection at times where no fault is detected. For example, automated data collection can occur any time a configuration change is detected, or it can occur on a scheduled, routine basis. Note that the vendor can provide different levels of service. For example, some clients can be restricted to analysis only when a fault is detected, while others might be restricted to fault detection and configuration changes, while still others might be allowed an analysis at any time.

Preferably, step S02 involves post-trigger data collection to ensure the information gathered is up to date. However, the invention provides for partial or complete data collection prior to triggering. For example, if the data-collection software is run concurrently with the application, it can gather data in advance and only send data when an error or other event is detected. Also, data can be collected in advance and used unless there is an indication, e.g., in register dates, that some of the data may have changed since collection.

The data collected can include information about the client system, including kernel or registry settings and the applications and processes that are resident on the system. The data can also include information about application 21, for example, error log files, patch information, configuration files, and context-specific information about the fault that is generated by application 21. Data collection software 23 can also include a configuration file that contains client-specific information such as a client identification handle and the email address for a specific contact person of client. In addition, data-collection software 23 can include a policy file to allow client 15 to control what data is collected and what data is transmitted.

In data transmit step S03, the collected data can be transmitted directly if the computer running application 21 has an Internet connection. Alternatively, the data can be routed to another computer on the client network that has an Internet connection. In either case, the policy file can permit or require manual intervention by client 15 before transmitting diagnostic data over the Internet. The data transport protocol is flexible and secure, e.g., HTTPS. Alternatively, another encrypted protocol can be used. The data transport can also be provided via a web service or a virtual private network.

The invention provides for simultaneous levels of availability. The data can be received at a coordination server of vendor network 11. The coordination server can be implemented as an agent-based solution and/or a J2EE or .NET application server. The coordination server is capable of handling multiple fault data downloads concurrently (from the same or different clients).

For each set of client data, analysis software 31, used at step S05, receives the data (collected at step S02) from the coordination server. Analysis software may be statistical in nature, or may be based on machine learning techniques, or may consist of an artificial intelligence rule-based / case-based expert system, or any combination thereof. Analysis software will also include contextual analysis. It draws upon knowledge base 33, which is continually updated as a result of on-going vendor evaluation of software and events reported by different clients. Knowledge base 33 is an unstructured object-oriented database. Alternatively, a native XML database, relational database, or any other database can be used.

Analysis software 31 processes the data to identify a problem signature. To this end it applies context-specific analysis tools such as a software patch analysis tool or a system analysis tool. Analysis software 31 can also apply general content collection tools (such as automatically searching through vendor's support solution documents, online manuals, private and public user forum logs, technical support workflow system case logs, defect tracking systems, internal and external support website search engines, and a number of other online resources).

One of the issues addressed by analysis software 31 is compatibility with hardware and other software associated with the computer on which application 21 is running. Since these items are often provided by sources other than vendor, vendor network 11 mines third-party online resources for information pertinent to servicing application 21. For example, analysis software 31 can use database queries, intelligent mobile agents, spiders, bots, and internal web services.

In addition, analysis software 31 can provide trending analysis applied to the fault data and the solution data to generate high-level trouble-shooting or solution information. Optionally, machine-learning software (such as a neural network and/or a support vector machine) can be used to generate further generalizations. To accommodate different human languages, analysis software provides dynamic translation of incoming diagnostic data and of outgoing recommendations as needed.

An analysis report, including recommendations, is stored in knowledge base 33 and is posted on a protected area of website 35 at step S06. The recommendations can involve either or both of human readable recommendations and files to be downloaded to client system 13. The files can also be "read me" files for a human or executable files or configuration files. Hints about the software fault can also be tied to specific troubleshooting comments in a technical support database to provide additional context-specific information.

Notification at steps S07 and S08 can involve email to a contact person. The contact can be an Information Technology expert person or group of people at client. Typically the email address to which the notice is sent is stored in a configuration file of client. Alternatively, this information can be stored on a client information base on vendor network 11. Typically, the email identifies a URL, preferably with an embedded link, that leads to the recommendations posted at step S06. Alternatively, notification can be made to a client personal-digital-assistant or cell phone. Client policies may additionally be used to dictate how notification is performed or if it is performed.

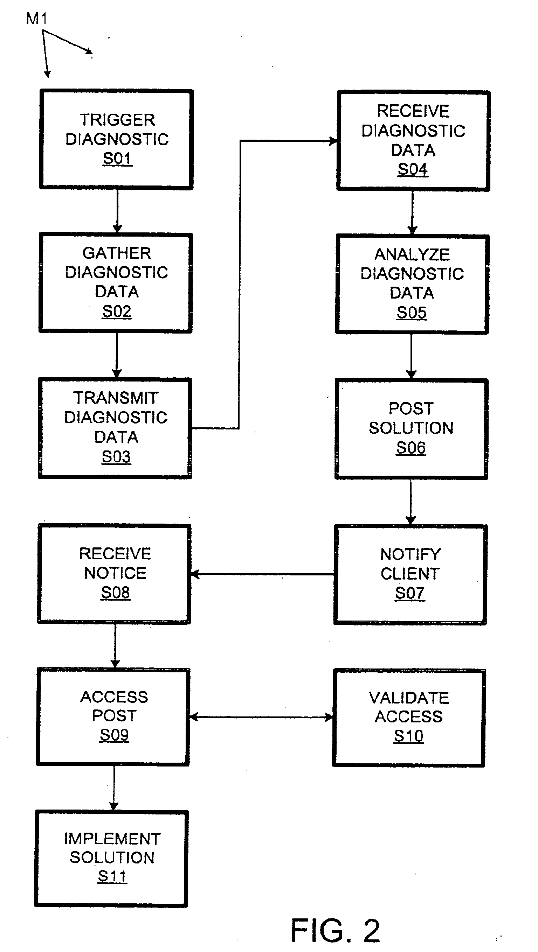

Access and validation occur at steps S09 and S10. These steps are indicated both in FIG. 2 and in FIG. 1 with the three-segment arrow between client 15 and vendor website 35. Typically, a URL is provided that allows a client in without validation. A link is provided to the actual site at which the recommendation is made. However, accessing this link triggers a request for customer identification information. The identification information is required before the recommendation can be accessed. This is intended to keep competitors and other unauthorized parties from knowledge of faults occurring on client computer system 13.

The client implements recommendations at step S11. This typically involves a human 17 following some instructions. The instructions may include downloading files to the client computer. This may be updates, patches, further instructions, etc. The recommendations may be intended to solve a problem. Alternatively, they may simply direct the client to other sources of information that may prove helpful. Additionally, the vendor analysis system may determine the exact cause of the client fault. In this case, the vendor system may automatically install a software patch in the client environment if the client policies allow for it. The client policy may specify a test machine for the automated patch installation, or may indicate such patches can be installed on the production system where the fault occurred. If a patch is installed automatically, the client will receive notification regarding what was done specifically.

If the client is unable or unwilling to use a solution generated for them, the client would be able to select an option on the analysis report web page that would automatically convert the fault data into a workflow case. A support person of technical support personnel 25 would be engaged. The analysis web page also includes a customer feedback section, which is used to gather information concerning the usefulness of the recommendations. Automatic trending is also applied to the feedback information, which is used to drive automatic dynamic adjustment of the analysis systems.

Diagnostic data-collection software 23 and diagnostic data-analysis software 31 are preferably co-developed by the same entity. In the present case, both are developed by vendor AP1, which provides diagnostic data-collection software to client 15. Alternatively, a third party can provide both diagnostic data-collection software to client 15 and diagnositic data-analysis software to vendor AP1. Furthermore, diagnostic data-collection software can be developed or modified by an entity other than the entity that developed diagnostic data-analysis software 31.

The invention provides for more complex business arrangements, as where the manufacturer of application 21 contracts out support services to a third-party vendor or relies on on-site (in-house) support services. In that case, the manufacturer may provide periodic updates to the third-party vendor or on-site client support group. All software referred to herein is provided on computer-readable media. These other variations upon and modifications to the detailed embodiments are provided for by the present invention, the scope of which is defined by the following claims.

## Claims

1. A method for a vendor to service a client computer:
triggering real-time diagnostic data collection by diagnostic-data-collection software on said client computer so as to generate diagnostic data;
transmitting said diagnostic data to a vendor computer system not including said client computer;
analyzing said diagnostic data using said vendor computer system so as to generate a recommendation; and
communicating said recommendation to said client.

2. A method as recited in Claim 1 wherein said triggering step involves detecting a software fault and automatically triggering said diagnostic data collection in response to said detection.

3. A method as recited in Claim 1 wherein said communicating step involves posting said recommendation on a web site.

4. A method as recited in Claim 3 wherein said communicating step further involves emailing instructions to said client on how to access said recommendation.

5. A method as recited in Claim 3 wherein said web site implements client validation measures if and when said client attempts to access said web site.

6. A computer program set comprising:
first computer-readable media residing on a vendor computer system;
a first program embodied in said first computer-readable media, said first program receiving diagnostic data from a client computer system of a client, analyzing said diagnostic data to generate a recommendation, and communicating said recommendation to said client.

7. A computer program set as recited in Claim 6 wherein said communicating involves posting said recommendation on a website and notifying said client that said recommendation has been posted.

8. A computer program set as recited in Claim 6 further comprising:
a second computer-readable media residing on said client computer system;
a second program embodied in said second computer-readable media, said second program responding to a triggering event by collecting diagnostic data on said client computer system and transmitting said diagnostic data to said vendor computer system.

9. A computer program set as recited in Claim 8 wherein said triggering event is the detection of a software fault.

10. A computer program set as recited in Claim 6 wherein said triggering event is the detection of a computer configuration change.
